# EUROPEAN PATENT SPECIFICATION

(11) **EP 4 476 468 B1**
(45) Date of publication and mention of the grant of the patent: **28.10.2026**
(21) Application number: 23749330.9
(22) Date of filing: 07.02.2023
(51) Int. Cl.: F16H 7/10, F16H 7/08, F16H 7/12

(54) **TENSIONER WITH TENSIONER LOCK WITH PROJECTION THAT INCLUDES FIRST AND SECOND PROJECTION PARTS**
SPANNER MIT SPANNERSPERRE MIT EINEM ERSTEN UND EINEM ZWEITEN PROJEKTIONSTEIL
TENDEUR AVEC VERROU POURVU D'UNE PARTIE SAILLANTE QUI COMPREND DES PREMIÈRE ET SECONDE PARTIES

(30) Priority: 07.02.2022 US 202263307282 P
(43) Date of publication of application: 18.12.2024
(73) Proprietor: Litens Automotive Partnership, Woodbridge, Ontario L4L 5T7 (CA)
(72) Inventor: MALTARICH, Matthew, Woodbridge, Ontario L4L5T7 (CA); SO, Edwin Lik Hang, Woodbridge, Ontario L4L5T7 (CA); SPICER, Gary John, Woodbridge, Ontario L4L5T7 (CA)
(74) Representative: Grünecker Patent- und Rechtsanwälte PartG mbB
(86) International application number: PCT/CA2023/050161
(87) International publication number: WO 2023/147676

(56) References cited:
- EP-A1- 1 541 896
- EP-A1- 1 541 896
- DE-A1- 4 015 027
- DE-A1- 4 015 027
- JP-A- 2012 154 455
- US-A1- 2008 293 527
- US-A1- 2008 293 527
- US-A1- 2020 032 884
- US-A1- 2020 032 884
- US-B2- 10 309 497

## Description

### FIELD

The specification relates generally to tensioners for endless drive arrangements on engines and more particularly to a tensioner with a tensioner lock that holds an arm of the tensioner to prevent movement of the arm past a limit position.

### BACKGROUND OF THE DISCLOSURE

It is known to provide tensioners for accessory drive belts or other timing belts for engines. It is sometimes necessary or desirable to replace the tensioner. With a typical tensioner, the tensioner is held in a pre-tensioned state in order to facilitate its installation on the engine, so that the tensioner's pulley can more easily clear the belt during the installation process. However, the tensioner is typically held in this pre-tensioned state with a pin, that the installer then removes once the tensioner has been installed, so as to permit the tensioner's arm to drive the pulley into the belt. The pin however, is typically loose and so as the installer pulls it out, the very high forces on the tensioner arm can eject the pin suddenly, and at high speed, posing a danger to the installer and potentially being launched into some other area of the engine compartment where it can interfere with the operation of some other underhood component. Some solutions have been proposed in the prior art, in order to eliminate the risk of a pin being lost or injuring the installer, however such solutions are in some cases relatively expensive and/or inconvenient to use. Further relevant prior art is described in JP 2012 154455 A, US 10 309 497 B2, US 2008/293527 A1, EP 1 541 896 A1, DE 40 15 027 A1, and US 2020/032884 A1.

There is a need for a solution that performs well, and that is inexpensive, and/or that solves or mitigates one or more other problems.

### SUMMARY OF THE DISCLOSURE

To solve the aforementioned problem, a tensioner having the features of claim 1 is provided. Further preferred embodiments are defined in the dependent claims.

Other technical advantages may become readily apparent to one of ordinary skill in the art after review of the following figures and description.

### BRIEF DESCRIPTIONS OF THE DRAWINGS

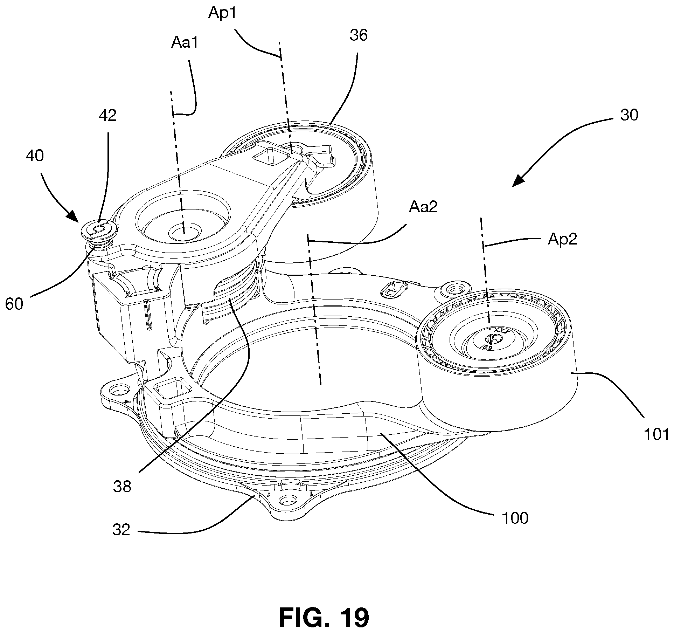

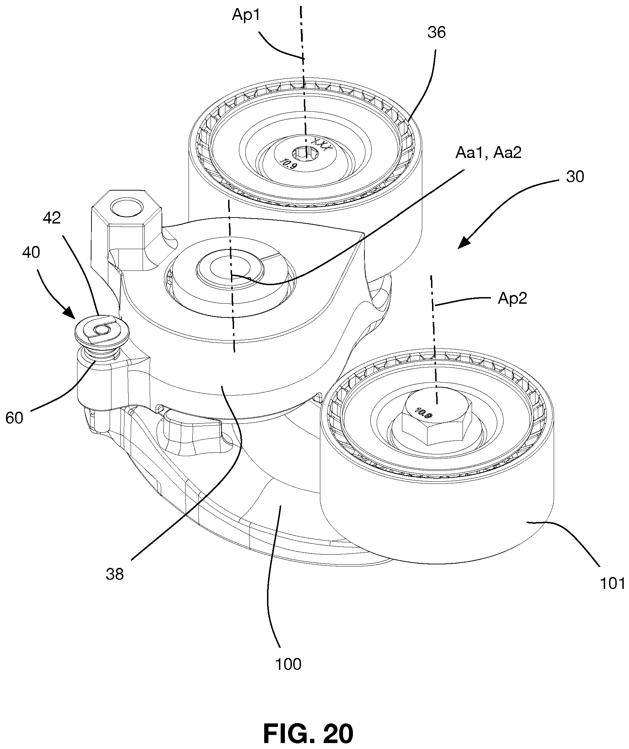

In the following figures, embodiments are disclosed. The embodiments shown in Figures 19 and 20 represent embodiments of the present invention. The further embodiments shown in the figures are helpful for understanding the present invention. The scope of protection is defined by the claims. For a better understanding of the embodiment(s) described herein and to show more clearly how the embodiment(s) may be carried into effect, reference will now be made, by way of example only, to the accompanying drawings.
Figure 1 shows an elevation view of engine with an endless drive arrangement, with a tensioner.
Figure 2 is a perspective view of the tensioner shown in Figure 1, with a tensioner lock having a projection in a release position.
Figure 3 is a perspective exploded view of the tensioner shown in Figure 2.
Figure 4 is a perspective view of the tensioner shown in Figure 2 with the tensioner lock having the projection in a locking position.
Figure 5 is a sectional side view the tensioner shown in Figure 2 with the projection in the locking position.
Figure 6 is a sectional side view the tensioner shown in Figure 2 with the projection about to move to the locking position.
Figure 7 is a sectional side view showing a step in the assembly of the projection in the tensioner lock shown in Figure 2.
Figure 8 is a sectional side view showing another step in the assembly of the projection in the tensioner lock shown in Figure 2.
Figure 9 is a perspective view of a tensioner in which the projection is urged by a closed-cell foam spring.
Figure 10 is an exploded perspective view of a tensioner in which the projection moves radially.
Figure 11 is a perspective view of a tensioner in accordance with yet another embodiment of the present disclosure, with a projection in a locking position, wherein the projection is oriented tangentially.
Figure 12 is a perspective view of a portion of the tensioner shown in Figure 11, with the projection in a release position.
Figure 13A is a perspective exploded view of a portion of the tensioner shown in Figure 11, illustrating a step in the assembly of the projection.
Figure 13B is a perspective exploded view of a portion of the tensioner shown in Figure 11, illustrating another step in the assembly of the projection.
Figure 13C is a perspective exploded view of a portion of the tensioner shown in Figure 11, illustrating another step in the assembly of the projection.
Figure 13D is a perspective exploded view of a portion of the tensioner shown in Figure 11, illustrating another step in the assembly of the projection.
Figure 14a is a sectional plan view of a portion of the tensioner shown in Figure 11, illustrating the assembly step shown in Figure 13C.
Figure 14b is a sectional plan view of a portion of the tensioner shown in Figure 11, illustrating the assembly step shown in Figure 13D.
Figure 15 is a perspective view of a tensioner wherein the tensioner is a timing belt tensioner.
Figure 16 is a plan view of a tensioner wherein the tensioner is a two-axis, pivoting, two-armed tensioner.
Figure 17 is a perspective view of the tensioner shown in Figure 16.
Figure 18 is an exploded perspective view of the tensioner shown in Figure 16.
Figure 19 is a perspective view of a tensioner in accordance with an embodiment of the present invention, wherein the tensioner is a type of orbital, two-armed tensioner.
Figure 20 is a perspective view of a tensioner in accordance with yet another embodiment of the present inventon, wherein the tensioner is a single axis, pivoting, two-armed tensioner (also known as a V tensioner).

Unless otherwise specifically noted, articles depicted in the drawings are not necessarily drawn to scale.

### DETAILED DESCRIPTION OF EXAMPLE EMBODIMENTS

For simplicity and clarity of illustration, where considered appropriate, reference numerals may be repeated among the Figures to indicate corresponding or analogous elements. In addition, numerous specific details are set forth in order to provide a thorough understanding of the embodiment or embodiments described herein. However, it will be understood by those of ordinary skill in the art that the embodiments described herein may be practiced without these specific details. In other instances, well-known methods, procedures and components have not been described in detail so as not to obscure the embodiments described herein. It should be understood at the outset that, although exemplary embodiments are illustrated in the figures and described below, the principles of the present disclosure may be implemented using any number of techniques, whether currently known or not. The present disclosure should in no way be limited to the exemplary implementations and techniques illustrated in the drawings and described below.

Various terms used throughout the present description may be read and understood as follows, unless the context indicates otherwise: "or" as used throughout is inclusive, as though written "and/or"; singular articles and pronouns as used throughout include their plural forms, and vice versa; similarly, gendered pronouns include their counterpart pronouns so that pronouns should not be understood as limiting anything described herein to use, implementation, performance, etc. by a single gender; "exemplary" should be understood as "illustrative" or "exemplifying" and not necessarily as "preferred" over other embodiments. Further definitions for terms may be set out herein; these may apply to prior and subsequent instances of those terms, as will be understood from a reading of the present description.

Modifications, additions, or omissions may be made to the systems, apparatuses, and methods described herein without departing from the scope of the disclosure. For example, the components of the systems and apparatuses may be integrated or separated. Moreover, the operations of the systems and apparatuses disclosed herein may be performed by more, fewer, or other components and the methods described may include more, fewer, or other steps. Additionally, steps may be performed in any suitable order. As used in this document, "each" refers to each member of a set or each member of a subset of a set.

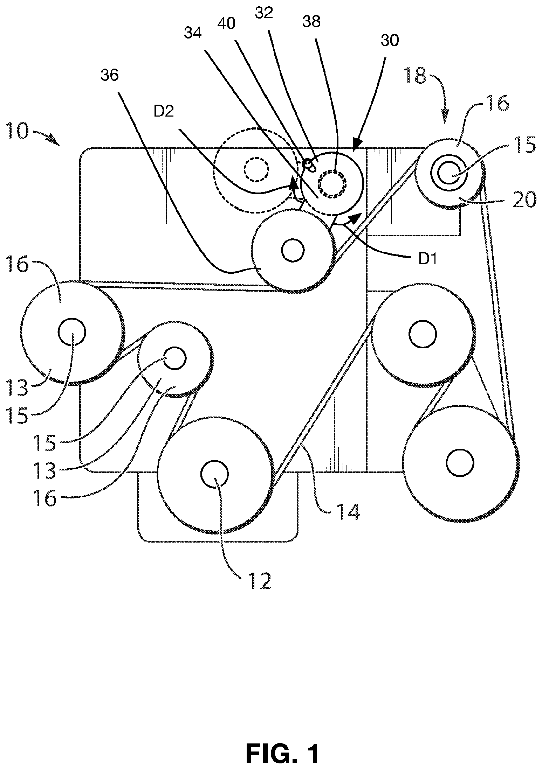

Reference is made to Figure 1, which shows an engine 10 for a vehicle. The engine 10 includes a crankshaft 12 which drives an endless drive element, which may be, for example, a belt 14. Via the belt 14, the engine 10 drives a plurality of accessories 16, such as a supercharger 18. Each accessory 16 includes an input drive shaft 15 with a pulley 13 thereon, which is driven by the belt 14. A decoupler pulley 20 may be provided instead of a simple pulley, between the belt 14 and the input shaft 15 of any one or more of the belt-driven accessories 16, and in particular the supercharger 18.

A simplified image of a tensioner is shown at 30 in Figure 1. The tensioner 30 is provided for providing a suitable amount of tension in the belt 14, so as to inhibit belt slip from taking place between the belt 14 and any of the pulleys engaged therewith.

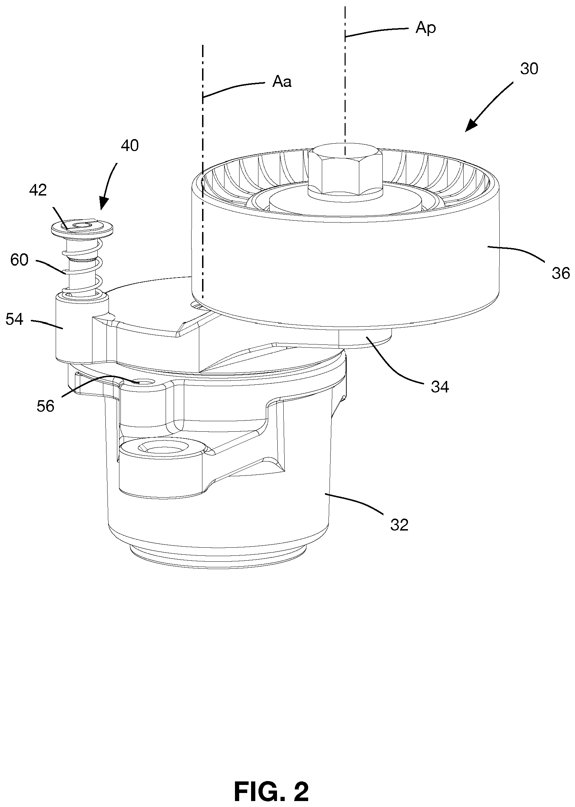

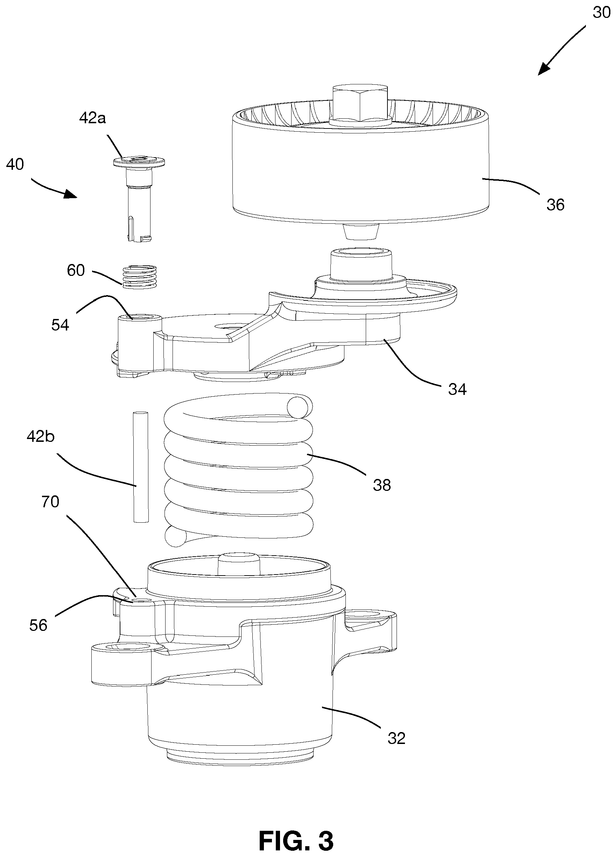

The tensioner 30 is shown in more detail in Figures 2 and 3. As is known in the art of tensioners, the tensioner 30 includes a tensioner base 32 that is mountable to a fixed element relative to the engine (which may be the engine block itself, as shown in Figure 1 ), and a tensioner arm 34 that is movably mounted to the tensioner base 32 for movement in a free-arm direction shown at D1, which is towards the belt 14 (see Figure 1) and a load-stop direction shown at D2, which is away from the belt 14. A tensioner pulley 36 is mounted on the tensioner arm 34 for engagement with the belt 14 and which is rotatable about a tensioner pulley axis Ap. A tensioner arm biasing member 38 is positioned to urge the tensioner arm 34 in the free-arm direction, in order to tension the belt 14. The tensioner arm biasing member 38 may be any suitable type of biasing member, such as a helical torsion spring, one or more compression springs or any other suitable type of biasing member. The tensioner arm 34 may be movable via a movement about a tensioner arm axis Aa, relative to the tensioner base 32, or by any other suitable type of movement such as an orbital movement about the tensioner arm axis Aa, which is an axis of orbital motion, as is known in the art.

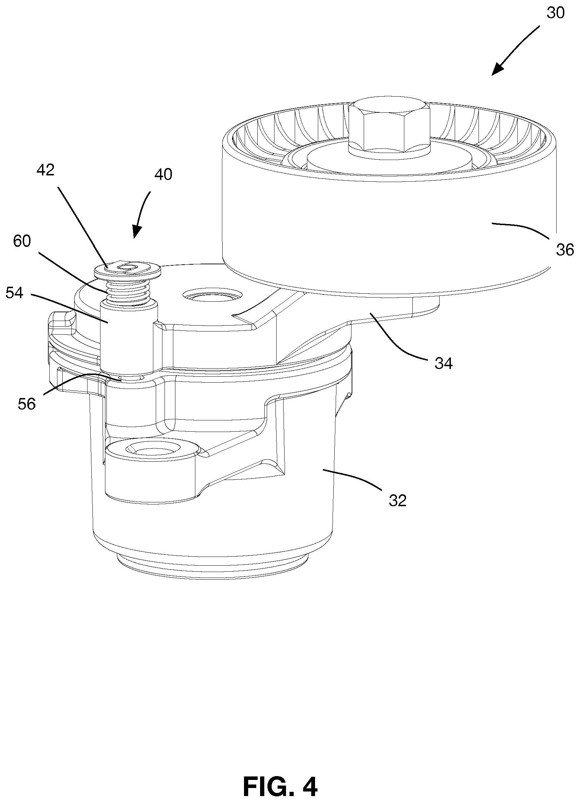

The tensioner 30 may include a tensioner lock 40 (Figures 2 and 3). The tensioner lock 40 includes a locking feature 41 that is connected to one of the tensioner arm 34 and the tensioner base 32, and a projection 42 that is movably mounted to the other of the tensioner arm 34 and the tensioner base 32, for movement between a locking position (Figure 4) and a release position (Figure 2). In the embodiment shown, the projection 42 is on the tensioner arm 34 and the locking feature 41 is on the tensioner base 32, however in other embodiments the projection 42 could be on the tensioner base 32 and the locking feature 41 could be on the tensioner arm 34.

In the locking position, the projection 42 cooperates with the locking feature 41 to limit movement of the tensioner arm 34 in the free arm direction D1 past a limit position (shown in dashed lines in Figure 1). In the release position, the projection 42 permits movement of the tensioner arm 34 in the free arm direction past the limit position.

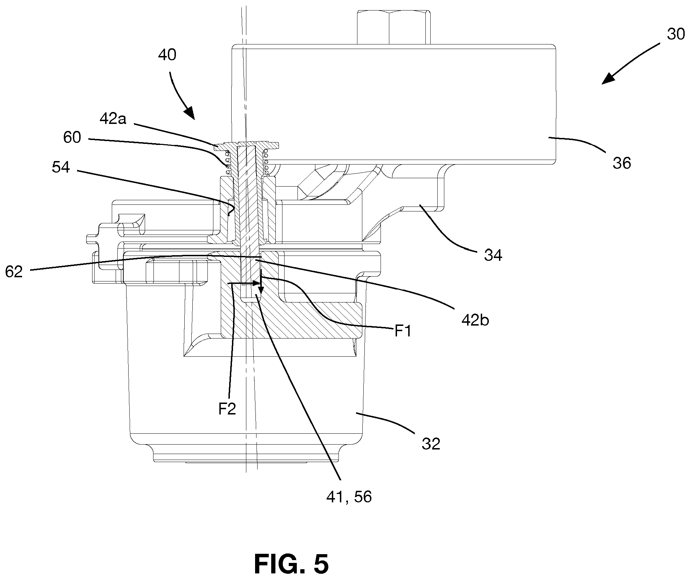

In the embodiment shown, the projection 42 includes a first projection part 42a and a second projection part 42b. The first and second projection parts 42a and 42b may connect together by any suitable means. For example, one of the first and second projection parts 42a and 42b may include a projection connection recess 43 into which the other of the first and second projection parts 42a and 42b extends to hold the first and second projection parts 42a and 42b together. In the example embodiment shown, the first projection part 42a includes the recess (shown at 46 in Figures 3 and 5).

The first projection part 42a has a first projection-withdrawal limit surface 46 thereon that is engageable with a second projection-withdrawal limit surface 48 on the aforementioned other of the tensioner arm 34 and the tensioner base 32, to prevent complete withdrawal of the projection 42 from the aforementioned other of the tensioner arm 32 and the tensioner base 34. In the example shown, the first projection-withdrawal limit surface 46 includes a first lip surface 50a on a first tab 51a on a first flex arm 52a and a second lip surface 50b on a second tab 51 b on a second flex arm 52b. The second projection-withdrawal limit surface 48, in the example shown, is in the form of an internal shoulder in a first pass-through aperture 54 through which the projection 42 passes.

The second projection part 42b is engageable with the locking feature 41 to limit movement of the tensioner arm 34 in the free arm direction D1 past the limit position. In the embodiment shown, the locking feature 41 is a locking aperture 56.

In another sense, the projection 42 could be referred to as a projection assembly 42 which includes a projection support and a projection. In such a sense, the first projection part 42a could be referred to as the projection support 42a and the second projection part 42b could be referred to as the projection 42b. Notwithstanding such an alternative nomenclature, throughout the remainder of the present description, the projection 42 is referred to as a projection, which includes the first projection part 42a and the second projection part 42b.

The tensioner lock 40 further includes a projection biasing member 60 that is positioned to urge the projection 42 towards the release position. The projection biasing member 60 may be a helical compression spring, or any other suitable type of biasing member.

The projection 42 and the locking feature 41 are positioned such that, when the projection 42 is in the locking position, urging of the tensioner arm 34 in the free arm direction by the tensioner arm biasing member 38 causes a locking force F1 (Figure 5) to be applied by the locking feature 41 on the projection to hold the projection 42 in the locking position, and such that, movement of the tensioner arm 34 opposite to the free arm direction releases the locking force so as to permit the projection biasing member 60 to drive the projection to the release position, thereby freeing the tensioner arm 34 to move in the free arm direction.

The generation of the locking force F1 is described below. As can be seen in Figure 5, the projection 42 and the locking feature 41 are positioned such that, when the projection 42 is in the locking position, urging of the tensioner arm in the free arm direction by the tensioner arm biasing member 38 causes a circumferentially directed force F2 to be applied on the wall 62 of the locking aperture 56, by the projection 42. The circumferentially directed force F2 is circumferentially directed about the tensioner arm axis Ap. This circumferentially directed force F2 results in a friction force to be applied by the locking feature 41 (the wall shown at 62 of the locking aperture 56, specifically) on the projection 42. By selecting the surface finishes of the projection 42 and the wall 62 of the locking aperture 56) the friction force may be selected to be strong enough to overcome the biasing force of the projection biasing member 60 and thereby hold the projection 42 in the locking position. This friction force is the locking force F1 since it is the force that holds the projection 42 in the locking position. In the embodiment shown, as can be seen, the projection 42 becomes slightly canted due to the moment that is applied to it as a result of the arrangement of the tensioner arm 34, the projection 42 and the tensioner base 32.

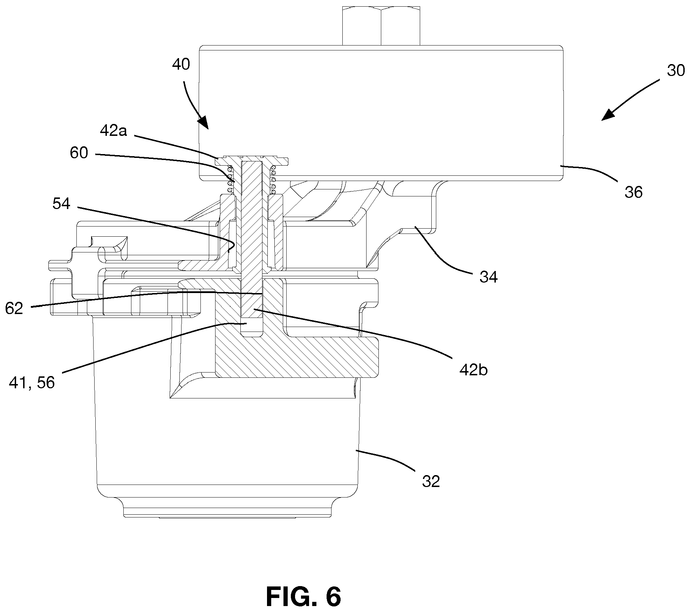

In the embodiment shown, movement of the tensioner arm 34 opposite to the free arm direction D1 (i.e. movement of the tensioner arm 34 in the load-stop direction D2), removes the projection 42 from being engaged (or engaged as strongly) with the wall 62 of the locking aperture 56 (as shown in the position shown in Figure 6), thereby eliminating or reducing the circumferentially directed force F2 therebetween. Eliminating or reducing the circumferentially directed force F2 therebetween in turn eliminates or reduces the friction force (i.e. the locking force F1) therebetween. In other words, movement of the tensioner arm 34 opposite to the free arm direction D1 (i.e. movement of the tensioner arm 34 in the load-stop direction D2) releases the locking force F1 so as to permit the projection biasing member 60 to drive the projection 42 to the release position, thereby freeing the tensioner arm 34 to move in the free arm direction D1.

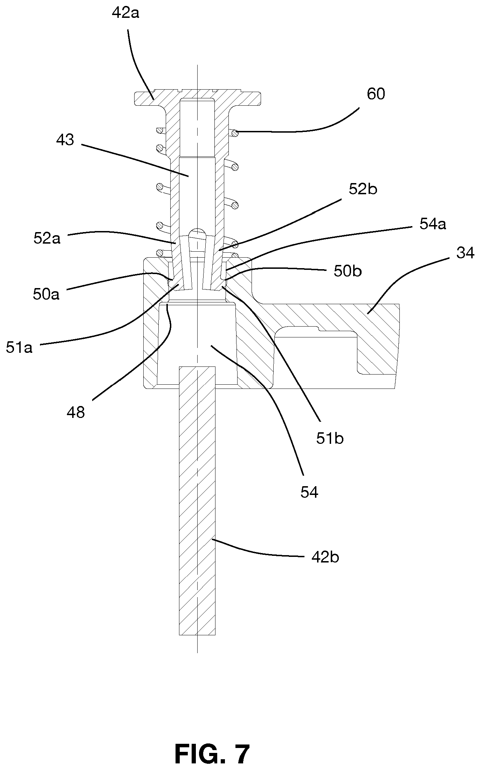

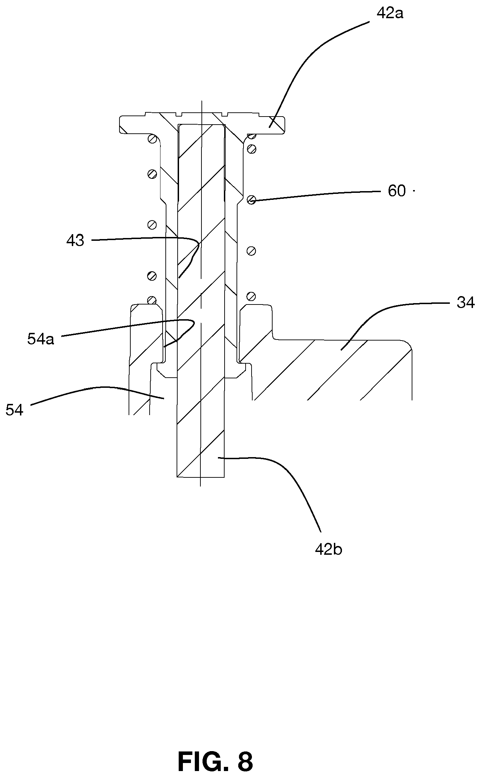

The assembly of the projection 42 is now described with reference to Figure 7. To assemble the projection 42, the user can position the projection biasing member 60 onto the first projection part 42a. The user can insert the first projection part 42a into and through a first portion 54a of the first pass-through aperture 54, thereby compressing the flex arms 52a and 52b. Once the user has inserted the first projection part 42a through sufficiently that the first and second tabs 51a and 51b have cleared the first portion of the first pass-through aperture 54, the flex arms 52a and 52b can expand outwards (Figure 8) so that the first projection-withdrawal limit surface 46 (in this instance including the first lip surface 50, and the second lip surface 50b) is positioned to interact with the second projection-withdrawal limit surface 48 to prevent the withdrawal of the first projection part 42a from the first pass-through aperture 54.

Once the first projection part 42a is in position with the flex arms 52a and 52b expanded outward, the second projection part 42b can be connected to the first projection part 42a. This may be by driving the second projection part 42b into the projection connection recess 43 in the first projection part 42a (Figure 8).

As shown in Figure 2, the tensioner base 32 (i.e. the aforementioned other of the tensioner arm 34 and the tensioner base 32) may further include a second-part-withdrawal limit surface 70 that is positioned to prevent complete withdrawal of the second projection part 42b from the first projection part 42a once the tensioner 30 is fully assembled. As a result, the first and second projection parts 42a and 42b are captured in the tensioner 30 once the tensioner 30 is fully assembled. As a result, the first and second projection parts 42a and 42b are prevented from being separated from the remainder of the tensioner 30 once the tensioner 30 is installed on the vehicle. By ensuring that the projection 42 remains with the tensioner 30, the projection 42 can easily be reinserted into the locking aperture 56 in the event that it is needed at any point, such as to change out the belt 14 in the accessory drive system.

It will be noted that the manufacture of the projection 42 from the first projection part 42a and the second projection part 42b is advantageous since the second projection part 42b may be made from a suitably strong first material such as a metal, while keeping its shape simple, such as a simply extruded shape (in this embodiment, a simple cylindrical shape), while the first projection part 42a may be made from a relatively weaker, second material (e.g. a polymeric material such as a type of nylon), which can be more easily formed (e.g. molded) into a relatively more complex shape, and which is subjected to lower forces than the second projection part 42b.

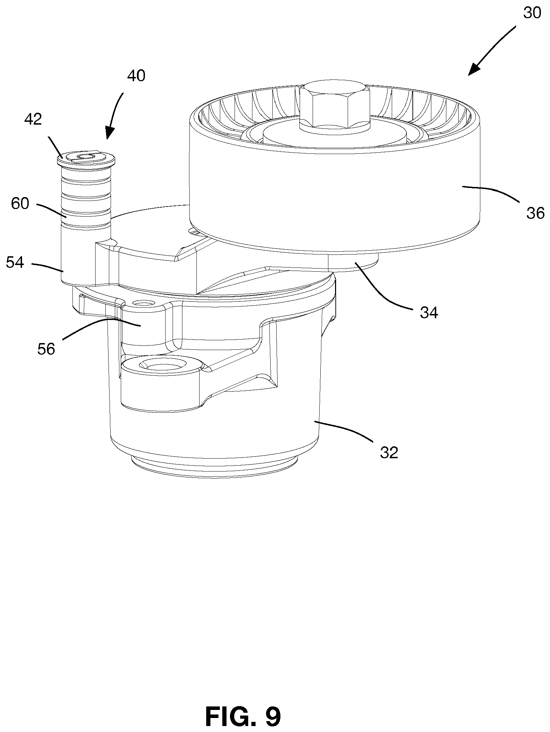

The projection biasing member 60 may be any other suitable type of biasing member other than a helical coil compression spring. For example, the projection biasing member 60 may be a closed-cell foam spring 64 as shown in Figure 9.

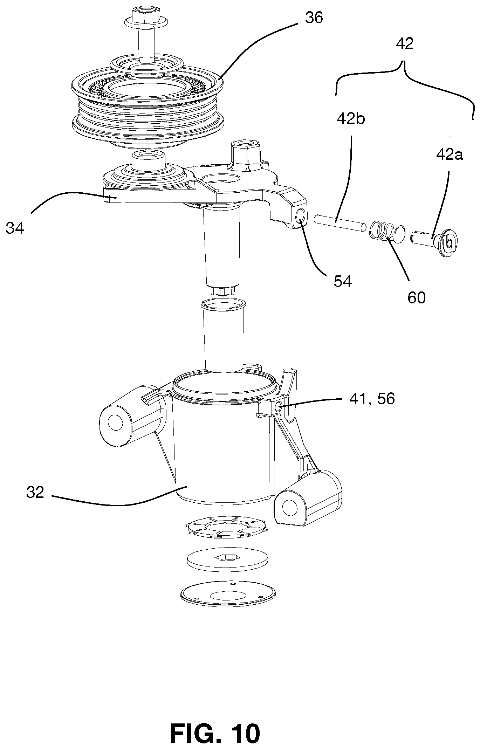

As can be seen, the projection 42 is movable in the axial direction of the tensioner 30. Put a different way, the projection 42 is movable along a tensioner arm locking axis, shown at Apl, which is parallel to the tensioner arm axis Aa. This orientation of the tensioner arm locking axis Apl makes it easy to operate when holding the tensioner arm 34 and rotating it to the position in which the projection 42 aligns with the locking feature 41. However, it is possible for the orientation of the projection 42 to be other than axial. For example, reference is made to Figure 10 which shows an exploded view of the tensioner 30 modified such that the projection 42 is movable along a tensioner arm locking axis Apl that is radial in direction, instead of axial. In the exploded view, the tensioner arm biasing member 38 has been omitted for convenience. Other minor modifications have been made as well, such as the positions and orientations of the mounting lugs shown at 70, relative to the embodiment shown in Figure 2. Positioning the projection 42 so that it is movable in a radial direction may make it easier to fit the tensioner 30 into place in certain engine applications where there is no room for the version shown in Figure 2.

As can be seen the features and surfaces present in the embodiment in Figure 2 are also present in the embodiment shown in Figure 10, but are oriented in accordance with the direction of movement of the projection 42.

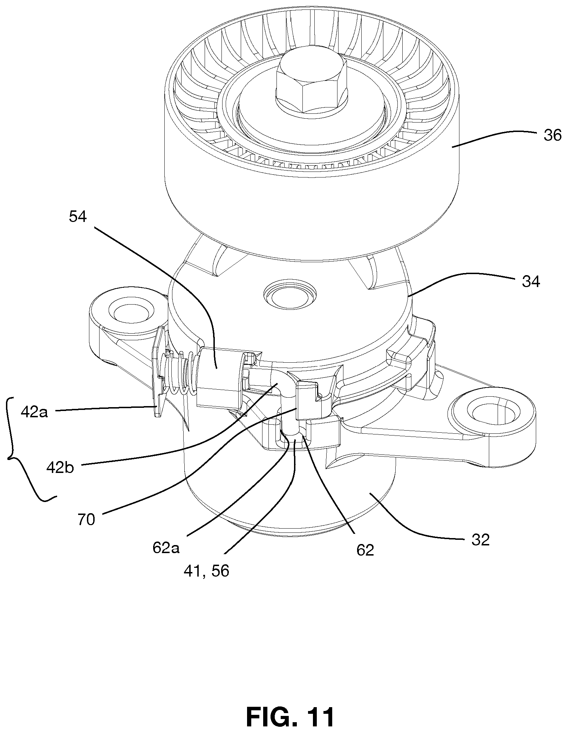

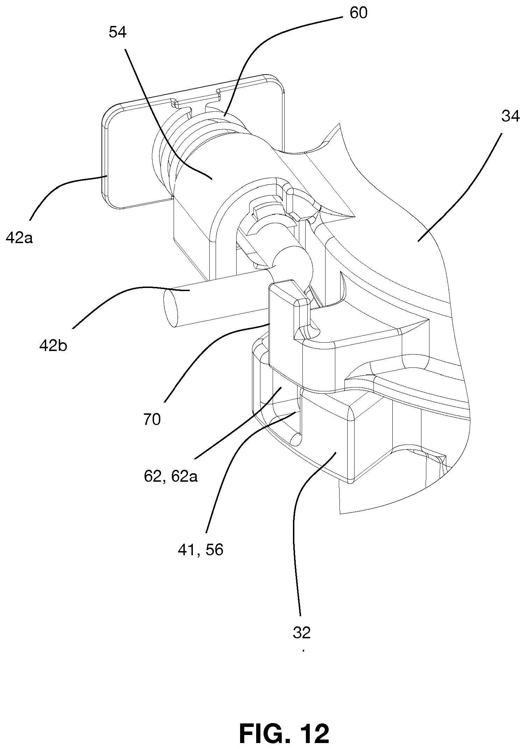

In yet another embodiment, the tensioner 30 may be arranged such that the projection 42 is oriented tangentially instead of axially or radially, as shown in Figure 11. Figure 11 shows the projection 42 in the locking position, while Figure 12 shows the projection 42 in the release position. The projection 42 in the embodiment in Figures 11 and 12 may be pivotable between the release position and the locking position.

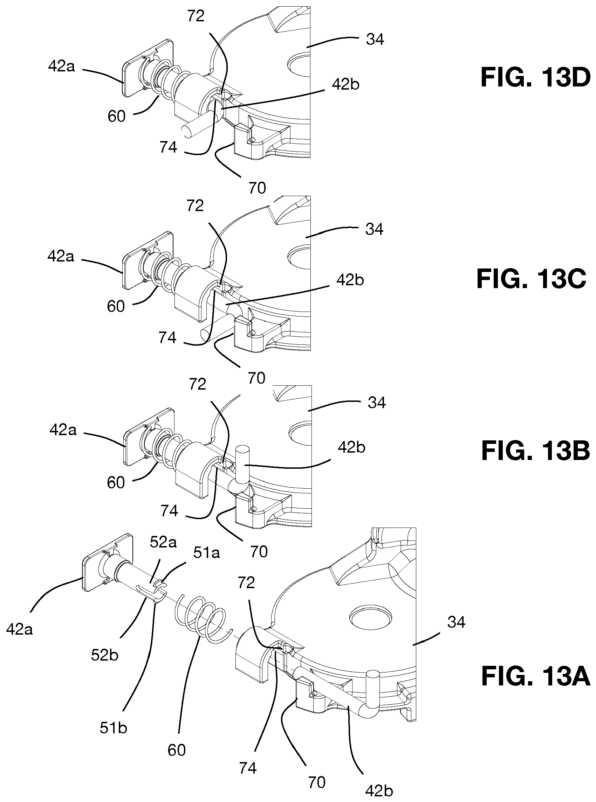

The assembly of the projection 42 in the embodiment shown in Figures 11 and 12 is described below. The projection 42 is shown in a disassembled form in Figure 13a. The second projection part 42b is shown oriented in an installation position. The first projection part 42a is inserted into the first pass-through aperture 54. One of the tabs 51a and 51b is constrained to pass through an orientation channel shown at 74 in the first pass-through aperture 54 which holds the first projection portion 42a in a specific orientation. Optionally, the first projection portion 42a is inserted into the first pass-through aperture 54 sufficiently that the aforementioned one of the tabs 51a and 51b clears the orientation channel 74, although it need not. The second projection-withdrawal limit surface 48 in this embodiment is not internal to the first pass-through aperture 54, but is instead on one end of the first pass-through aperture 54.

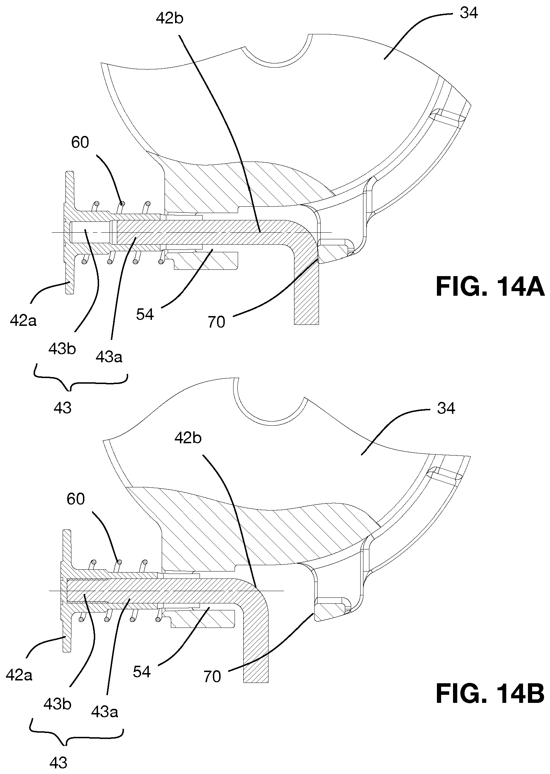

When the first projection portion 42a is at least partially inserted into the first pass-through aperture 54 (e.g. as shown in Figure 13b), the second projection part 42b is inserted into a first portion 43a of the recess 43 of the first projection part 42a. The recess 43 includes a first portion 43a and a second portion 43b, and is shown in more detail in Figures 14a and 14b. The first portion 43a of the recess 43 is wider than the second portion 43b of the recess 43. Accordingly, the first portion 43a has a looser fit on the second projection part 42b than the second portion 43b has. When the second projection portion 42b is inserted into the first portion 43a of the recess 43 (Figures 13b), the second projection portion 42b can still rotate. The second projection portion 42b is inserted sufficiently deeply into the first portion 43a of the recess to clear the second-part-withdrawal limit surface 70. The second projection portion 42b may then be rotated by some amount such that it is positioned to be limited by the second-part-withdrawal limit surface 70. This is the position shown in Figure 13c and 14a. The first projection part 42a is oriented such that at least one of the tabs 51a and 51b is engaged with a rotation limit surface 72. The second projection part 42b may then be inserted further into the recess 43 so as to engage the second portion 43b which is a tighter fit on the second projection part 42b than is the first portion 43a of the recess 43, and which is a sufficiently tight fit that the second projection part 42b is not rotatable in the recess 43 at this point. This position is shown in Figures 13d and 14b.

If needed, the first projection part 42a is then inserted sufficiently until the aforementioned one of the tabs 51a and 51b clears the orientation channel 74. At this point, one of the tabs 51a and 51b is engaged with a rotation limit surface 76 on the tensioner arm 34 (Figure 12). The projection 42 has at this point been assembled and is in the release position. The projection 42 may be rotated from this position to the locking position, shown in Figure 11.

The projection biasing member 60 in this embodiment is a helical torsion spring instead of a compression spring, however, any suitable type of biasing member may be used.

In this embodiment, the projection 42 and the locking feature 41 are positioned such that, when the projection 42 is in the locking position, urging of the tensioner arm 34 in the free arm direction D1 by the tensioner arm biasing member 38 causes a locking force F1 to be applied by the locking feature 41 on the projection 42 to hold the projection 42 in the locking position, and such that, movement of the tensioner arm 34 opposite to the free arm direction D1 releases the locking force F1 so as to permit the projection biasing member 60 to drive the projection 42 to the release position, thereby freeing the tensioner arm 34 to move in the free arm direction D1. In this embodiment, the friction force that is the locking force F1 is applied between a wall portion 62a of the wall 62.

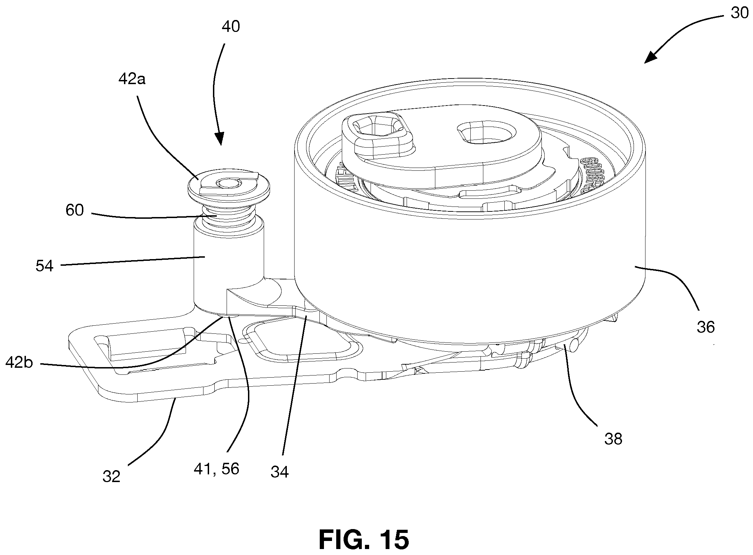

The embodiments shown in Figures 1-14 are all tensioners for an accessory drive. It will be understood by one skilled in the art that the tensioner lock 40 may be provided on a timing belt tensioner, as shown in Figure 15, which is used to tension a timing belt (not shown). In the embodiment shown in Figure 15, the projection 42 is movable in an axial direction, however any other type of movement may be provided based on the needs (e.g. the available room) of the particular engine on which the tensioner 30 is being used.

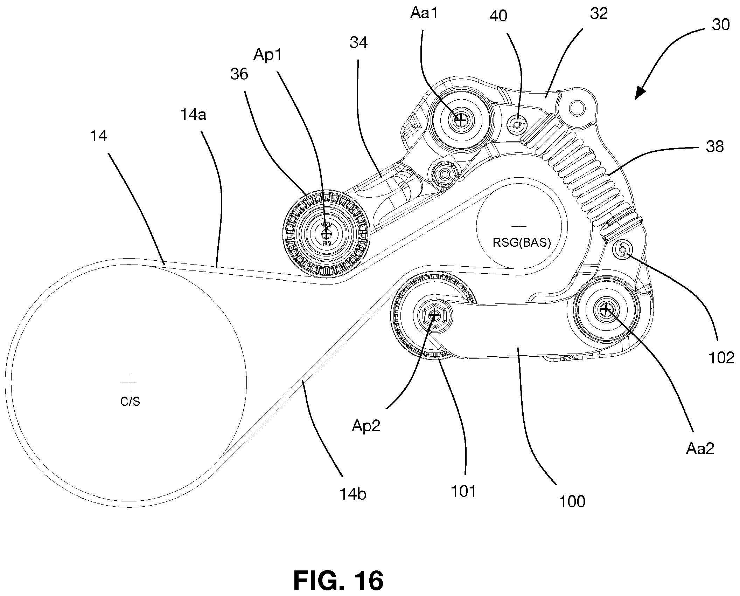

The embodiments shown in Figures 1-15 are all single-arm tensioners. However, it is alternatively possible for the tensioner 30 to be a two-arm tensioner. For example, in the embodiment shown in Figures 16, 17 and 18, the tensioner 30 is a two-axis, pivoting, two-armed tensioner that includes the tensioner arm 34, which is a first tensioner arm, and a second tensioner arm shown at 100. The first tensioner arm 34 is movable about a first tensioner arm axis Aa1 and the second tensioner arm 100 is movable about a second tensioner arm axis Aa2 that is different than the first tensioner arm axis Aa1. The first tensioner pulley 38 is rotatable about a first tensioner pulley axis Ap1 that is spaced from the first tensioner arm axis Aa1, while the second tensioner arm 100 has a second tensioner pulley 101 thereon that is rotatable about a second tensioner pulley axis Ap2. The tensioner 30 may be as described in any of the embodiments of US Patent 9759293. The tensioner 30 in this embodiments employs the first tensioner arm 34 to engage a first span 14a of the belt 14, and the second tensioner arm 100 to engage a second span 14b of the belt 14. Each of the first and second tensioner arms 34 and 100 may be biased or urged in a respective free-arm direction (which is counter clockwise for the first tensioner arm 34 and clockwise for the second tensioner arm 100) by a tensioner arm biasing member 38, that is, in the present embodiment, a helical compression spring, but which could be any other suitable type of biasing member, and which could be made up of two or more separate biasing members.

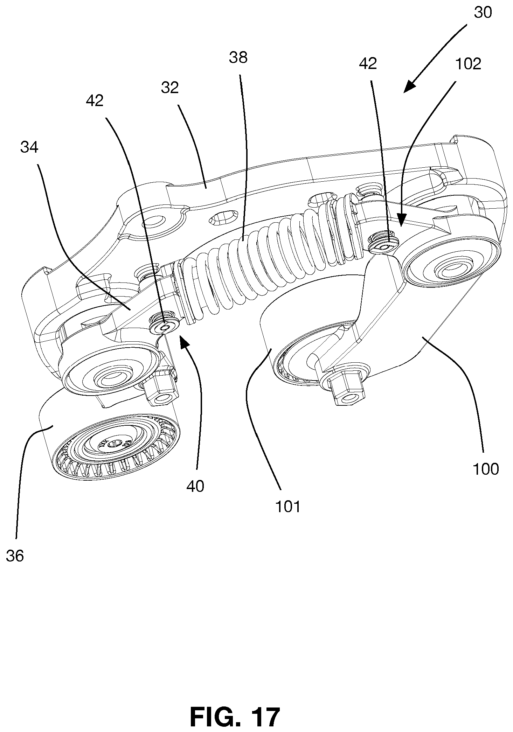

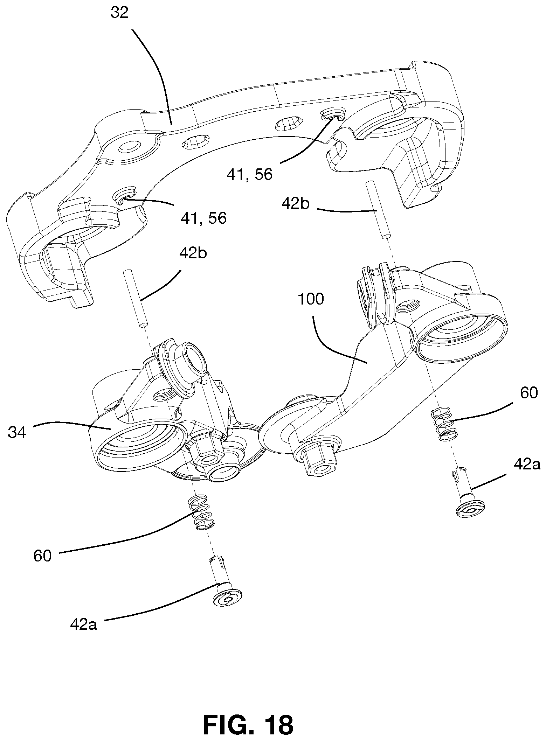

Figure 17 is a perspective view of the tensioner 30, and Figure 18 is an exploded view of the tensioner 30. As can be seen, each of the first and second tensioner arms 34 and 100 includes a tensioner lock. The tensioner lock for the first tensioner arm 34 is shown at 40, and is similar to the tensioner lock 40 shown in Figure 2. The tensioner lock for the second tensioner arm 100 is shown at 102, and may also be similar to the tensioner lock 40 shown in Figure 2. For each of the tensioner locks 40 and 102, and is positioned to hold the respective first and second tensioner arms 34 and 100 in a locking position relative to the tensioner base 32. Figure 18 shows the elements that make up the tensioner locks 40 and 102 in further detail.

Figure 19 and Figure 20, which represent embodiments of the present invention, show other types of two-armed tensioners 30. The tensioner 30 shown in Figure 19 is a type of orbital, two-armed tensioner, while the tensioner 30 shown in Figure 20 is a single-axis, pivoting, two-armed tensioner (also known as a V tensioner). These two tensioners 30 both differ in at least one respect from the two-armed tensioner 30 shown in Figures 16-18. For example, the tensioners 30 shown in Figures 19 and 20 both employ a single tensioner lock 40, which acts to lock the first tensioner arm 34 to limit movement thereof past a limit position, relative to the second tensioner arm 100, as opposed to locking the first tensioner arm 34 (and the second tensioner arm 100) relative to the tensioner base 32.

For the embodiments shown in figures 19 and 20, the tensioner 30 may be said to include a tensioner base 32 that is mounted to be stationary relative to the engine. The tensioner 30 further includes a first tensioner arm 34 that is movably mounted to the tensioner base 32 for movement about a first tensioner arm axis Aa1 and which has a first tensioner pulley 36 rotatably mounted thereto for rotation about a first tensioner pulley axis Ap1 that is spaced from the first tensioner arm axis Aa1. The first tensioner pulley 36 is positioned for engagement with a first span 14a of an endless drive member 14 of the endless drive arrangement. The tensioner 30 further includes the second tensioner arm 100 that is movably mounted to the tensioner base 32 for movement about a second tensioner arm axis Aa2 and which has a second tensioner pulley 101 rotatably mounted thereto for rotation about a second tensioner pulley axis Ap2 that is spaced from the second tensioner arm axis Aa2. The second tensioner pulley Ap2 is positioned for engagement with a second span 14b of the endless drive member 14 of the endless drive arrangement. The tensioner 30 further includes a tensioner arm biasing member 38 that is positioned to bias the first and second tensioner arms 34 and 100 in a free arm direction relative to one another. The tensioner 30 further includes a tensioner lock 40, which includes a locking feature 41, a projection 42 and a projection biasing member 60. The locking feature 41 is on one of the first tensioner arm 34 and the second tensioner arm 100. The projection 42 is movably mounted to the other of the first tensioner arm 34 and the second tensioner arm 100, and is movable between a locking position and a release position. In the locking position (using the same motion as is shown in Figures 2-6), the projection 42 cooperates with the locking feature 41 to limit movement of the first and second tensioner arms 34 and 100 in the free arm direction past a limit position. In the release position, the projection permits movement of the first and second tensioner arms in the free arm direction (i.e. past the limit position). The projection biasing member 60 is positioned to urge the projection 42 towards the release position. The projection 42 and the locking feature 41 are positioned such that, when the projection 42 is in the locking position, urging of the first and second tensioner arms 34 and 100 in the free arm direction D1 by the tensioner arm biasing member 38 causes the locking force F1 to be applied by the locking feature on the projection 42 to hold the projection 42 in the locking position, and such that, movement of the first and second tensioner arms 34 and 100 opposite to the free arm direction D1 releases the locking force so as to permit the projection biasing member 60 to drive the projection 42 to the release position, thereby freeing the first and second tensioner arms 34 and 100 to move in the free arm direction D1. The projection 42 includes a first projection part 42a and a second projection part 42b. One of the first and second projection parts 42a and 42b includes a recess 43 into which the other of the first and second projection parts 42a and 42b extends to hold the first and second projection parts together. The second projection part 42b is engageable with the locking feature 41 to limit movement of the first and second tensioner arms 34 and 100 in the free arm direction D1 past the limit position. The limit position is shown in solid lines in Figures 19 and 20 for the respective tensioners 30 shown therein. The first projection part 42a has a first projection-withdrawal limit surface 46 thereon that is engageable with a second projection-withdrawal limit surface 70 on the other of the first and second tensioner arms 34 and 100 to prevent complete withdrawal of the projection 42 from said other of the first and second tensioner arms 34 and 100.

In the embodiment shown in Figure 19, the first and second tensioner arm axes Aa1 and Aa2 are separate axes, whereas in Figure 20, the first and second tensioner arm axes Aa1 and Aa2 are the same axis (i.e. are coextensive).

In the disclosure herein, the terms 'bias' and 'urge' and variants thereof may be used interchangeably and are intended to mean the same thing as one another.

While the description contained herein constitutes a plurality of embodiments of the present invention, it will be appreciated that the present invention is susceptible to further modification and change without departing from the fair meaning of the accompanying claims.

## Claims

1. A tensioner (30) for tensioning an endless drive arrangement on an engine (10), the tensioner (30) comprising: a tensioner base (32) that is mounted to be stationary relative to the engine (10); a first tensioner arm (34, 100) that is movably mounted to the tensioner base (32) for movement about a first tensioner arm axis (AaI) and which has a first tensioner pulley (36, 101) rotatably mounted thereto for rotation about a first tensioner pulley axis (Ap1) that is spaced from the first tensioner arm axis (AaI), wherein the first tensioner pulley (36, 101) is positioned for engagement with a first span (14a) of an endless drive member (14) of the endless drive arrangement; a second tensioner arm (100) that is movably mounted to the tensioner base (32) for movement about a second tensioner arm axis (Aa2) and which has a second tensioner pulley (101) rotatably mounted thereto for rotation about a second tensioner pulley axis (Ap2) that is spaced from the second tensioner arm axis (Aa2), wherein the second tensioner pulley (101) is positioned for engagement with a second span (14b) of the endless drive member (14) of the endless drive arrangement; and a tensioner arm biasing member (38) that is positioned to bias the first and second tensioner arms (34, 100) in a free arm direction (D1) relative to one another; and **characterized by** a tensioner lock (40, 102), including: a locking feature (41) on one of the first tensioner arm (34, 100) and the second tensioner arm, a projection (42) that is movably mounted to the other of the first tensioner arm (34, 100) and the second tensioner arm (100), and is movable between a locking position and a release position, wherein, in the locking position, the projection (42) cooperates with the locking feature (41) to limit movement of the first and second tensioner arms (34, 100) in the free arm direction (D1) past a limit position, and wherein, in the release position, the projection (42) permits movement of the first and second tensioner arms (34, 100) in the free arm direction (D1); and a projection biasing member (60) that is positioned to urge the projection (42) towards the release position, wherein, the projection (42) and the locking feature (41) are positioned such that, when the projection (42) is in the locking position, urging of the first and second tensioner arms (34, 100) in the free arm direction (D1) by the tensioner arm biasing member (38) causes a locking force (F1) to be applied by the locking feature (41) on the projection (42) to hold the projection (42) in the locking position, and such that, movement of the first and second tensioner arms (34, 100) opposite to the free arm direction (D1) releases the locking force (F1) so as to permit the projection biasing member (60) to drive the projection (42) to the release position, thereby freeing the first and second tensioner arms (34, 100) to move in the free arm direction (D1), wherein the projection (42) includes a first projection part (42a) and a second projection part (42b), wherein one of the first and second projection parts (42a, 42b) includes a recess (43) into which the other of the first and second projection parts (42a, 42b) extends to hold the first and second projection parts (42a, 42b) together, wherein the second projection part (42b) is engageable with the locking feature (41) to limit movement of the first and second tensioner arms (34, 100) in the free arm direction (D1) past the limit position, and wherein the first projection part (42a) has a first projection-withdrawal limit surface (46) thereon that is engageable with a second projection-withdrawal limit surface (48) on said other of the first and second tensioner arms (34, 100) to prevent complete withdrawal of the projection (42) from said other of the first and second tensioner arms (34, 100).

2. The tensioner (30) as claimed in claim 1, wherein the projection (42) is movable in an axial direction between the release position and the locking position.

3. The tensioner (30) as claimed in claim 1, wherein the projection (42) is movable in a radial direction between the release position and the locking position.

4. The tensioner (30) as claimed in claim 1, wherein the projection (42) is oriented tangentially and is pivotable between the release position and the locking position.

5. The tensioner (30) as claimed in claim 4, wherein the projection (42) is pivotable about a tangential axis between the release position and the locking position.

6. The tensioner (30) as claimed in claim 1, wherein the first projection part (42a) is plastic and the second projection part (42b) is metallic.

7. The tensioner (30) as claimed in claim 1, wherein said other of the first and second tensioner arms (34, 100) has a first pass-through aperture (54), wherein the first projection part (42a) is captured in the first pass-through aperture (54) by at least the first and second projection-withdrawal limit surfaces (46, 48), and wherein said one of the first and second tensioner arms (34, 100) includes a second-part-withdrawal limit surface (70) that is positioned to prevent complete withdrawal of the second projection part (42b) from the first projection part (42a).

8. The tensioner (30) as claimed in claim 1, wherein the locking feature (41) is a locking aperture (56) and the locking force (F1) is a friction force between a wall of the locking aperture (62) and the second projection part (42b).

## Patentansprüche

1. Spannvorrichtung (30) zum Spannen einer Endlosantriebsanordnung an einem Motor (10), wobei die Spannvorrichtung (30) umfasst:
eine Spannvorrichtungsbasis (32), die relativ zum Motor (10) ortsfest montiert ist;
einen ersten Spannarm (34, 100), der beweglich an der Spannvorrichtungsbasis (32) gelagert ist zur Bewegung um eine erste Spannarmachse (Aa1), und der eine erste Spannrolle (36, 101) aufweist, die daran drehbar um eine erste Spannrollenachse (Ap1) gelagert ist, die von der ersten Spannarmachse (Aa1) beabstandet ist, wobei die erste Spannrolle (36, 101) so positioniert ist, dass sie mit einem ersten Trum (14a) eines endlosen Antriebselements (14) der Endlosantriebsanordnung in Eingriff steht;
einen zweiten Spannarm (100), der beweglich an der Spannvorrichtungsbasis (32) gelagert ist zur Bewegung um eine zweite Spannarmachse (Aa2), und der eine zweite Spannrolle (101) aufweist, die daran drehbar um eine zweite Spannrollenachse (Ap2) gelagert ist, die von der zweiten Spannarmachse (Aa2) beabstandet ist, wobei die zweite Spannrolle (101) so positioniert ist, dass sie mit einem zweiten Trum (14b) des endlosen Antriebselements (14) der Endlosantriebsanordnung in Eingriff steht; und
ein Spannarm-Vorspannelement (38), das so angeordnet ist, dass es den ersten und den zweiten Spannarm (34, 100) relativ zueinander in einer Freiarmrichtung (D1) vorspannt;
und **gekennzeichnet durch** eine Spannvorrichtungsverriegelung (40, 102), die umfasst:
ein Verriegelungsmerkmal (41) an einem der ersten und zweiten Spannarme (34, 100),
einen Vorsprung (42), der beweglich an dem anderen der ersten und zweiten Spannarme (34, 100) angebracht ist und zwischen einer Verriegelungsstellung und einer Freigabestellung bewegbar ist, wobei der Vorsprung (42) in der Verriegelungsstellung mit dem Verriegelungsmerkmal (41) zusammenwirkt, um die Bewegung der ersten und zweiten Spannarme (34, 100) in der Freiarmrichtung (D1) über eine Grenzstellung hinaus zu begrenzen, und wobei der Vorsprung (42) in der Freigabestellung die Bewegung der ersten und zweiten Spannarme (34, 100) in der Freiarmrichtung (D1) zulässt; und
ein Vorsprungs-Vorspannelement (60), das so angeordnet ist, dass es den Vorsprung (42) in Richtung der Freigabestellung vorspannt,
wobei der Vorsprung (42) und das Verriegelungsmerkmal (41) so angeordnet sind, dass, wenn sich der Vorsprung (42) in der Verriegelungsstellung befindet, das Vorspannen der ersten und zweiten Spannarme (34, 100) in der Freiarmrichtung (D1) durch das Spannarm-Vorspannelement (38) bewirkt, dass durch das Verriegelungsmerkmal (41) eine Verriegelungskraft (F1) auf den Vorsprung (42) ausgeübt wird, um den Vorsprung (42) in der Verriegelungsstellung zu halten, und dass eine Bewegung der ersten und zweiten Spannarme (34, 100) entgegen der Freiarmrichtung (D1) die Verriegelungskraft (F1) aufhebt, sodass das Vorsprungs-Vorspannelement (60) den Vorsprung (42) in die Freigabestellung bewegen kann, wodurch die ersten und zweiten Spannarme (34, 100) für eine Bewegung in der Freiarmrichtung (D1) freigegeben werden,
wobei der Vorsprung (42) einen ersten Vorsprungsteil (42a) und einen zweiten Vorsprungsteil (42b) umfasst,
wobei einer der ersten und zweiten Vorsprungsteile (42a, 42b) eine Aussparung (43) aufweist, in die sich der andere der ersten und zweiten Vorsprungsteile (42a, 42b) erstreckt, um den ersten und den zweiten Vorsprungsteil (42a, 42b) zusammenzuhalten,
wobei der zweite Vorsprungsteil (42b) mit dem Verriegelungsmerkmal (41) in Eingriff bringbar ist, um die Bewegung der ersten und zweiten Spannarme (34, 100) in der Freiarmrichtung (D1) über die Grenzstellung hinaus zu begrenzen, und
wobei der erste Vorsprungsteil (42a) eine erste Vorsprungs-Ausziehbegrenzungsfläche (46) aufweist, die mit einer zweiten Vorsprungs-Ausziehbegrenzungsfläche (48) an dem anderen der ersten und zweiten Spannarme (34, 100) in Eingriff bringbar ist, um ein vollständiges Herausziehen des Vorsprungs (42) aus dem anderen der ersten und zweiten Spannarme (34, 100) zu verhindern.

2. Spannvorrichtung (30) nach Anspruch 1, wobei der Vorsprung (42) in axialer Richtung zwischen der Freigabestellung und der Verriegelungsstellung bewegbar ist.

3. Spannvorrichtung (30) nach Anspruch 1, wobei der Vorsprung (42) in radialer Richtung zwischen der Freigabestellung und der Verriegelungsstellung bewegbar ist.

4. Spannvorrichtung (30) nach Anspruch 1, wobei der Vorsprung (42) tangential ausgerichtet und zwischen der Freigabestellung und der Verriegelungsstellung schwenkbar ist.

5. Spannvorrichtung (30) nach Anspruch 4, wobei der Vorsprung (42) um eine tangentiale Achse zwischen der Freigabestellung und der Verriegelungsstellung schwenkbar ist.

6. Spannvorrichtung (30) nach Anspruch 1, wobei der erste Vorsprungsteil (42a) aus Kunststoff und der zweite Vorsprungsteil (42b) aus Metall besteht.

7. Spannvorrichtung (30) nach Anspruch 1, wobei der andere der ersten und zweiten Spannarme (34, 100) eine erste Durchgangsöffnung (54) aufweist, wobei der erste Vorsprungsteil (42a) durch zumindest die erste und die zweite Vorsprungs-Ausziehbegrenzungsfläche (46, 48) in der ersten Durchgangsöffnung (54) gehalten ist, und wobei der eine der ersten und zweiten Spannarme (34, 100) eine Ausziehbegrenzungsfläche (70) für den zweiten Vorsprungsteil aufweist, die so angeordnet ist, dass ein vollständiges Herausziehen des zweiten Vorsprungsteils (42b) aus dem ersten Vorsprungsteil (42a) verhindert wird.

8. Spannvorrichtung (30) nach Anspruch 1, wobei das Verriegelungsmerkmal (41) eine Verriegelungsöffnung (56) ist und die Verriegelungskraft (F1) eine Reibungskraft zwischen einer Wand (62) der Verriegelungsöffnung (56) und dem zweiten Vorsprungsteil (42b) ist.

## Revendications

1. Tendeur (30) destiné à tendre un agencement d'entraînement sans fin sur un moteur (10), le tendeur (30) comprenant : une base de tendeur (32) montée de manière stationnaire par rapport au moteur (10) ; un premier bras de tendeur (34, 100) monté de manière mobile sur la base de tendeur (32) pour un déplacement autour d'un axe du premier bras de tendeur (Aa1) et comportant une première poulie de tendeur (36, 101) qui y est montée de manière rotative pour tourner autour d'un axe de la première poulie de tendeur (Ap1) espacé de l'axe du premier bras de tendeur (Aa1), dans lequel la première poulie de tendeur (36, 101) est positionnée pour un engagement avec un premier brin (14a) d'un élément d'entraînement sans fin (14) de l'agencement d'entraînement sans fin ; un deuxième bras de tendeur (100) monté de manière mobile sur la base de tendeur (32) pour un déplacement autour d'un axe du deuxième bras de tendeur (Aa2) et comportant une deuxième poulie de tendeur (101) qui y est montée de manière rotative pour tourner autour de l'axe d'une deuxième poulie de tendeur (Ap2) espacé de l'axe du deuxième bras de tendeur (Aa2), dans lequel la deuxième poulie de tendeur (101) est positionnée pour un engagement avec un deuxième brin (14b) de l'élément d'entraînement sans fin (14) de l'agencement d'entraînement sans fin ; et un élément de contrainte de bras de tendeur (38) positionné pour contraindre les premier et deuxième bras de tendeur (34, 100) dans une direction de bras libre (D1) l'un par rapport à l'autre ; et
**caractérisé par** un verrou de tendeur (40, 102), incluant : un moyen de verrouillage (41) sur un bras parmi le premier bras de tendeur (34, 100) et le deuxième bras de tendeur, une projection (42) qui est montée de manière mobile sur l'autre bras parmi le premier bras de tendeur (34, 100) et le deuxième bras de tendeur (100) et peut se déplacer entre une position de verrouillage et une position de libération, dans lequel, dans la position de verrouillage, la projection (42) coopère avec le moyen de verrouillage (41) pour limiter le mouvement des premier et deuxième bras de tendeur (34, 100) dans la direction de bras libre (D1) au-delà d'une position limite, et dans lequel, dans la position de libération, la projection (42) permet le mouvement des premier et deuxième bras de tendeur (34, 100) dans la direction de bras libre (D1) ; et un élément de contrainte de projection (60) positionné pour pousser la projection (42) vers la position de libération, dans lequel la projection (42) et le moyen de verrouillage (41) sont positionnés de sorte que, quand la projection (42) est dans la position de verrouillage, la poussée des premier et deuxième bras de tendeur (34, 100) dans la direction de bras libre (D1) par l'élément de contrainte de bras de tendeur (38) provoque l'application d'une force de verrouillage (F1) sur la projection (42) par le moyen de verrouillage (41) pour maintenir la projection (42) dans la position de verrouillage, et de telle sorte que le mouvement des premier et deuxième bras de tendeur (34, 100) opposé à la direction de bras libre (D1) libère la force de verrouillage (F1) afin de permettre à l'élément de contrainte de projection (60) d'entraîner la projection (42) jusqu'à la position de libération, libérant ainsi les premier et deuxième bras de tendeur (34, 100) pour qu'ils puissent se déplacer dans la direction de bras libre (D1), dans lequel la projection (42) inclut une première partie de projection (42a) et une deuxième partie de projection (42b), dans lequel l'une des première et deuxième parties de projection (42a, 42b) inclut un renfoncement (43) dans lequel s'étend l'autre partie parmi les première et deuxième parties de projection (42a, 42b) pour maintenir ensemble les première et deuxième parties de projection (42a, 42b), dans lequel la deuxième partie de projection (42b) peut s'engager avec le moyen de verrouillage (41) pour limiter le mouvement des premier et deuxième bras de tendeur (34, 100) dans la direction de bras libre (D1) au-delà de la position limite, et dans lequel la première partie de projection (42a) comporte une première surface limite de retrait de projection (46) qui peut s'engager avec une deuxième surface limite de retrait de projection (48) sur ledit autre bras parmi les premier et deuxième bras de tendeur (34, 100) pour empêcher le retrait complet de la projection (42) dudit autre bras parmi les premier et deuxième bras de tendeur (34, 100).

2. Tendeur (30) selon la revendication 1, dans lequel la projection (42) est mobile dans une direction axiale entre la position de libération et la position de verrouillage.

3. Tendeur (30) selon la revendication 1, dans lequel la projection (42) est mobile dans une direction radiale entre la position de libération et la position de verrouillage.

4. Tendeur (30) selon la revendication 1, dans lequel la projection (42) est orientée tangentiellement et peut pivoter entre la position de libération et la position de verrouillage.

5. Tendeur (30) selon la revendication 4, dans lequel la projection (42) peut pivoter autour d'un axe tangentiel entre la position de libération et la position de verrouillage.

6. Tendeur (30) selon la revendication 1, dans lequel la première partie de projection (42a) est en plastique et la deuxième partie de projection (42b) est métallique.

7. Tendeur (30) selon la revendication 1, dans lequel ledit autre bras parmi les premier et deuxième bras de tendeur (34, 100) comporte une première ouverture traversante (54), dans lequel la première partie de projection (42a) est capturée dans la première ouverture traversante (54) par au moins les première et deuxième surfaces limites de retrait de projection (46, 48), et dans lequel ledit un des premier et deuxième bras de tendeur (34, 100) inclut une surface limite de retrait de deuxième partie (70) qui est positionnée pour empêcher un retrait complet de la deuxième partie de projection (42b) hors de la première partie de projection (42a).

8. Tendeur (30) selon la revendication 1, dans lequel le moyen de verrouillage (41) est une ouverture de verrouillage (56) et la force de verrouillage (F1) est une force de frottement entre une paroi de l'ouverture de verrouillage (62) et la deuxième partie de projection (42b) .
